# EUROPEAN PATENT APPLICATION

(11) **EP 4 683 304 A1**
(43) Date of publication of application: **21.01.2026**
(21) Application number: 24778293.1
(22) Date of filing: 30.03.2024
(51) Int. Cl.: H04L 67/125

(54) **METHOD AND APPARATUS FOR CONTROLLING INTERNET-OF-THINGS DEVICE, AND RELATED DEVICE**

(30) Priority: 31.03.2023 CN 202310340354
(71) Applicant: Huawei Cloud Computing Technologies Co., Ltd., Guiyang, Guizhou 550025 (CN)
(72) Inventor: NIE, Yanling, Guiyang, Guizhou 550025 (CN); ZHANG, Xiangyong, Guiyang, Guizhou 550025 (CN); GUO, Bin, Guiyang, Guizhou 550025 (CN)
(74) Representative: Gill Jennings & Every LLP
(86) International application number: PCT/CN2024/085088
(87) International publication number: WO 2024/199508

(57) **Abstract**

This application discloses a method and apparatus for controlling an internet of things device, and a related device. Specifically, a control device can receive a first data identifier and first detection data corresponding to the first data identifier that are sent by a first internet of things device, and the control device can determine, based on the first data identifier, that the first internet of things device supports a first function. The control device determines whether the first detection data meets a trigger condition of a target object model rule corresponding to the first function, and sends a control instruction to a second internet of things device if the first detection data meets the trigger condition. The second internet of things device supports a second function corresponding to an execution action of the target object model rule. In this way, the control device can control an internet of things device from a function dimension according to the target object model rule, so that applicability of a wide range of devices or products can be implemented, and scalability of the internet of things can be improved.

## Description

This application claims priority to Chinese Patent Application No. 202310340354.X, filed with the China National Intellectual Property Administration on March 31, 2023 and entitled "METHOD AND APPARATUS FOR CONTROLLING INTERNET OF THINGS DEVICE, AND RELATED DEVICE", which is incorporated herein by reference in its entirety.

### TECHNICAL FIELD

This application relates to the field of internet of things technologies, and in particular, to a method and apparatus for controlling an internet of things device, and a related device.

### BACKGROUND

With rapid development of internet of things technologies, increasingly more internet of things devices are used in people's life. To control an internet of things device, an automation rule for controlling the internet of things device is usually set on a control device. The control device controls the internet of things device according to the preset automation rule.

Currently, the automation rule preset on the control device is for a specific internet of things device or a specific type of internet of things device. When a new device is connected to a network and the new device needs to be controlled, an operator needs to adjust or add an automation rule, resulting in limited scalability of the internet of things.

### SUMMARY

Embodiments of this application provide a method and apparatus for controlling an internet of things device, and a related device, so that an internet of things device can be controlled based on a function of the internet of things device according to an object model rule, to improve scalability of the internet of things.

According to a first aspect, this application provides a method for controlling an internet of things device. During specific implementation, the method includes: receiving running information sent by a first internet of things device, where the running information includes a first data identifier and first detection data corresponding to the first data identifier, the first data identifier indicates that the first internet of things device supports a first function, a trigger condition of a target object model rule corresponds to the first function, an execution action corresponds to a second function, and based on the running information, the first function supported by the first internet of things device may be determined, and that the first detection data meets the trigger condition of the target object model rule may be determined; and sending a control instruction to an internet of things device supporting the second function, that is, a second internet of things device, in response to that it is determined that the first detection data meets the trigger condition of the target object model rule, where the control instruction instructs that the second internet of things device to perform the execution action of the target object model rule. In this way, the target object model rule is used to control the internet of things device at a function granularity, and is not limited to a specific model and a type of the internet of things device. Therefore, the target object model rule can be widely applied to the internet of things device, and control efficiency of the internet of things device is improved.

In a possible implementation, the first data identifier is a first device identifier of the first internet of things device. The method further includes: obtaining the first device identifier and a first function identifier that are sent by the first internet of things device, where the first function identifier identifies the first function, and it can be determined, based on the first device identifier and the first function identifier, that the first internet of things device supports the first function; and establishing a correspondence between the first device identifier and the first function. In this way, when the first device identifier is subsequently received, it can be determined, based on the correspondence between the first device identifier and the first function, that the first internet of things device supports the first function.

In a possible implementation, the first data identifier is a function name of the first function. Based on the function name of the first function, it can be determined that the first internet of things device that sends the running information supports the first function.

In a possible implementation, that the second internet of things device supports the second function is determined based on a second data identifier sent by the second internet of things device. The second data identifier is obtained in advance. The method further includes: obtaining the second data identifier sent by the second internet of things device, where the second data identifier indicates that the second internet of things device supports the second function; and after obtaining the second data identifier, determining, based on the second data identifier, that the second internet of things device supports the second function.

In a possible implementation, the second data identifier is a second device identifier of the second internet of things device. The method further includes: receiving a second function identifier sent by the second internet of things device, where the second function identifier identifies the second function; and determining, based on the second device identifier and the second function identifier that are sent by the second internet of things device, that the second internet of things device supports the second function, and establishing a correspondence between the second device identifier and the second function. Subsequently, based on the received second device identifier, it is determined that the second internet of things device that sends the second device identifier supports the second function.

In a possible implementation, the second data identifier is a function name of the second function.

In a possible implementation, the target object model rule further includes a location condition. Before the control instruction is sent to the second internet of things device corresponding to the second data identifier, location information of the first internet of things device is first obtained, and it is determined that the location information of the first internet of things device meets the location condition. Then, the control instruction is sent to a second internet of things device whose location information meets the location condition. In this way, the internet of things device at a specific location can be controlled.

According to a second aspect, this application provides an apparatus for controlling an internet of things device, where the apparatus includes:

a receiving unit, configured to receive running information sent by a first internet of things device, where the running information includes a first data identifier and first detection data corresponding to the first data identifier, and the first data identifier indicates that the first internet of things device supports a first function; and

a sending unit, configured to send a control instruction to a second internet of things device in response to that it is determined that the first detection data meets a trigger condition of a target object model rule, where the second internet of things device supports a second function, the control instruction instructs the second internet of things device to perform an execution action of the target object model rule, the trigger condition of the target object model rule corresponds to the first function, and the execution action corresponds to the second function.

In a possible implementation, the first data identifier is a first device identifier of the first internet of things device, and the receiving unit is further configured to receive the first device identifier and a first function identifier that are sent by the first internet of things device, where the first function identifier identifies the first function.

The apparatus further includes:
an establishment unit, configured to establish a correspondence between the first device identifier and the first function.

In a possible implementation, the first data identifier is a function name of the first function.

In a possible implementation, the receiving unit is further configured to obtain a second data identifier sent by the second internet of things device, where the second data identifier indicates that the second internet of things device supports the second function.

The apparatus further includes:
a determining unit, configured to determine, based on the second data identifier, that the second internet of things device supports the second function.

In a possible implementation, the second data identifier is a second device identifier of the second internet of things device, and the receiving unit is further configured to receive a second function identifier sent by the second internet of things device, where the second function identifier identifies the second function.

The establishment unit is further configured to establish a correspondence between the second device identifier and the second function.

In a possible implementation, the second data identifier is a function name of the second function.

In a possible implementation, the target object model rule further includes a location condition, and before the control instruction is sent to the second internet of things device corresponding to the second data identifier, the receiving unit is further configured to obtain location information of the first internet of things device.

The apparatus further includes:
a determining unit, configured to determine that the location information of the first internet of things device meets the location condition.

That the sending unit is configured to send the control instruction to the second internet of things device includes:
the sending unit is configured to send the control instruction to a second internet of things device whose location information meets the location condition.

According to a third aspect, this application provides a device, where the device includes at least one processor and at least one memory. The at least one memory is configured to store instructions, and the at least one processor executes the instructions stored in the at least one memory, so that the device performs the method for controlling an internet of things device according to any one of the first aspect or the possible implementations of the first aspect.

According to a fourth aspect, this application provides a computing device cluster, where the computing device cluster includes at least one computing device, and the at least one computing device includes at least one processor and at least one memory. The at least one memory is configured to store instructions, and the at least one processor executes the instructions stored in the at least one memory, so that the computing device cluster performs the method for controlling an internet of things device according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fifth aspect, this application provides a computer-readable storage medium. The computer-readable storage medium stores instructions. When the instructions are run on at least one computing device, the at least one computing device is enabled to perform the method according to any one of the first aspect or the implementations of the first aspect.

According to a sixth aspect, this application provides a computer program product including instructions. When the computer program product runs on at least one computing device, the at least one computing device is enabled to perform the method according to any one of the first aspect or the implementations of the first aspect.

In this application, based on the implementations according to the foregoing aspects, the implementations may be further combined to provide more implementations.

### BRIEF DESCRIPTION OF DRAWINGS

FIG. 1 is a diagram of a structure of an internet of things according to an embodiment of this application;
FIG. 2 is a schematic flowchart of a method for controlling an internet of things device according to an embodiment of this application;
FIG. 3 is a diagram of a structure of an apparatus for controlling an internet of things device according to an embodiment of this application;
FIG. 4 is a diagram of a structure of a computing device according to an embodiment of this application; and
FIG. 5 is a diagram of a structure of a computing device cluster according to an embodiment of this application.

### DESCRIPTION OF EMBODIMENTS

The following describes solutions in embodiments of this application with reference to accompanying drawings in this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

In some scenarios of actual application of an internet of things device, a control device needs to obtain data collected by the internet of things device, and control, based on the obtained data and a preconfigured automation rule, linkage between the internet of things device and another internet of things device or control the internet of things device to perform a specific action. The automation rule preconfigured in the control device is basically implemented based on a trigger and an action mechanism. When a condition of the trigger is met, the trigger triggers a specific action. Currently, an automation rule may be set based on a single internet of things device or an internet of things device of a specific product type. For an automation rule set for a single internet of things device, a specific device that needs to be processed based on the automation rule may be determined based on a device identifier. For example, in an internet of things scenario of a smart home, an automation rule used to control a lighting device with a specific device identifier is preset. A trigger condition of a trigger is that an action of opening a door is detected, and an action mechanism is to turn on the lighting device. In an application process, when the control device detects, by using another internet of things device, that the door is opened, the trigger condition of the trigger is met, and the control device controls, according to the automation rule, the lighting device with the specific device identifier to perform a turn-on action. For an automation rule set for an internet of things device of a specific product type, a specific device that needs to be processed according to the automation rule can be determined for a specific product model. For another example, in an internet of things scenario of a campus, an automation rule used to control a fire extinguisher of a specific product model is preset. A trigger condition of a trigger is that smoke is detected, and an action mechanism is to start the fire extinguisher. In an application process, when the control device detects smoke by using another internet of things device, the trigger condition of the trigger is met, and the control device controls, according to the automation rule, the fire extinguisher of the specific product model to perform a starting action.

An automation rule configured for a single internet of things device is only applied to a small scale of internet of things configurations. When there are a large quantity of devices that access the internet of things, or there are a large quantity of times of updating the internet of things devices, an automation rule that adapts to each internet of things device needs to be manually adjusted or added. This is inconvenient to control the internet of things device and difficult to implement extension of the internet of things. An automation rule set for an internet of things device of a specific product model can be set only for an existing internet of things device. After an internet of things device of a new product type goes online, an automation rule needs to be reconfigured. In addition, corresponding automation rules also need to be configured for internet of things devices of different product types that have a same or similar function. In this case, a large number of automation rules need to be configured, and it is difficult to implement extension of the internet of things.

In view of this, embodiments of this application provide a method and apparatus for controlling an internet of things device, and a related device. The method can be performed by a control device in the internet of things. The control device in the internet of things is connected to another internet of things device, and is configured to process data sent by the internet of things device and control the internet of things device. A specific type of the control device is not limited in embodiments of this application. For example, the control device is a device that can be connected to the internet of things device and control the internet of things device, such as a gateway, a router, a server, an operation and maintenance platform, or a mobile terminal.

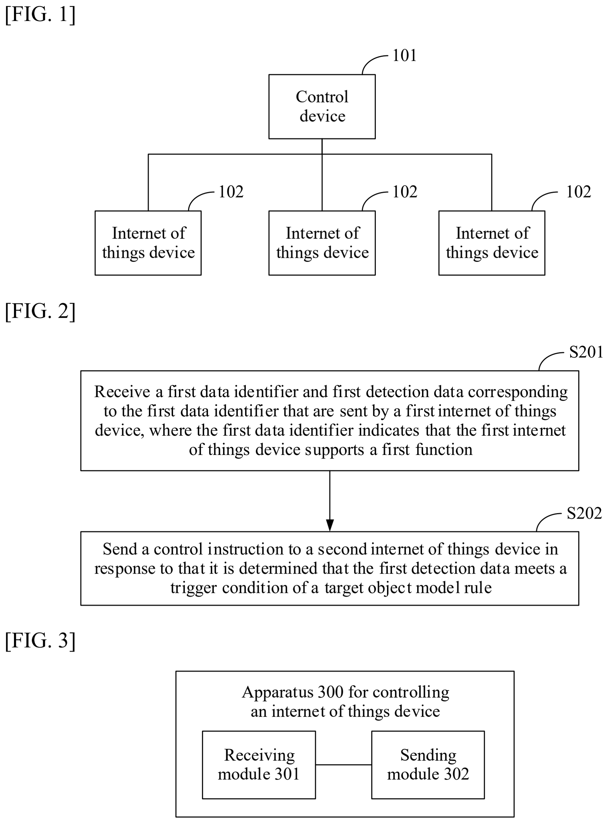

The control device pre-configures an object model rule. The object model rule includes a trigger condition and an execution action. The trigger condition corresponds to a first function, the execution action corresponds to a second function. The control device may control, based on the object model rule, an internet of things device having the second function to execute the execution action of the object model rule when detection data provided by an internet of things device having the first function meets the trigger condition. Specifically, as an example, FIG. 1 is a diagram of a structure of an internet of things according to an embodiment of this application. The internet of things includes a control device 101, an internet of things device 102, an internet of things device 103, and an internet of things device 104. The control device 101 is separately connected to the internet of things device 102, the internet of things device 103, and the internet of things device 104. The control device 101 obtains running data reported by the internet of things device 102, the internet of things device 103, and the internet of things device 104, and controls the internet of things devices based on the obtained running data and an object model rule.

The following separately describes three application scenarios by using the structure of the internet of things shown in FIG. 1 as an example.

A first application scenario is a smart life application scenario.

The control device 101 is a home router. A target object model rule is preconfigured on the control device 101. The target object model rule includes a trigger condition and an execution action. The trigger condition is that light intensity is less than 5 lux, and a motion of an object is detected. The execution action is to control a lighting device to turn on. The trigger condition separately corresponds to a first function, that is, a light intensity detection function, and another first function, that is, a motion detection function. The execution action corresponds to a second function, that is, a lighting function. The internet of things device 102 is a light intensity detector 102, the internet of things device 103 is a motion sensor 103, and the internet of things device 104 is a lighting device 104. A first data identifier of the light intensity detector 102 is sun.brightness (sun.brightness). The sun.brightness indicates that the light intensity detector 102 has the light intensity detection function, that is, the first function. A first data identifier of the motion sensor 103 is motion.detection (motion.detection). The motion.detection indicates that the motion sensor 103 has the motion detection function, that is, the first function. A second data identifier of the lighting device 104 is light.switch (light.switch). The light.switch indicates that the lighting device 104 has the lighting function, that is, the second function.

The control device 101 receives the first data identifier, that is, sun.brightness, sent by the light intensity detector 102, and first detection data, that is, light intensity detection data, corresponding to the first data identifier. The control device 101 receives the first data identifier, that is, motion.detection, sent by the motion sensor 103, and first detection data, that is, motion detection data, corresponding to the first data identifier. The trigger condition of the target object model rule corresponds to the light intensity detection function supported by the light intensity detector 102 and the motion detection function supported by the motion sensor 103. When the light intensity detection data is less than 5 lux, and the motion detection data indicates that a motion of an object is detected, the control device 101 determines that the trigger condition of the target object model rule is met. The control device 101 sends, to the lighting device 104 having the lighting function, a control instruction instructs to turn on a light. In this way, when the light intensity is less than 5 lux and a motion of an object is detected, the light can be controlled to turn on. The target object model rule can be applied to a control scenario including an internet of things device having a light intensity detection function, an internet of things device having a motion detection function, and an internet of things device having a lighting function. When an internet of things device needs to be added or adjusted subsequently, a specific product type of the internet of things device and a specific internet of things device are not limited, and matching of internet of things devices having the light intensity detection function, the motion detection function, and the lighting function can be implemented, so that scalability of the internet of things is improved.

A second application scenario is a smart campus application scenario.

The control device 101 is a campus operation and maintenance platform. A target object model rule is preconfigured on the control device 101. The target object model rule includes a trigger condition and an execution action. The trigger condition is detection of a fire alarm. The execution action is to shut down an elevator and open a fire door. The trigger condition corresponds to a first function, that is, a fire alarm detection function. The execution action separately corresponds to a second function, that is, an elevator control function, and another second function, that is, a fire door control function. The internet of things device 102 is a fire alarm detector 102, the internet of things device 103 is an elevator 103, and the internet of things device 104 is a fire door 104. A first data identifier of the fire alarm detector 102 is fireAlarm. Detection (fireAlarm. Detection). The fireAlarm. Detection indicates that the fire alarm detector 102 has the fire alarm detection function, that is, the first function. A second data identifier of the elevator 103 is elevator.switch (elevator.switch). The elevator.switch indicates that the elevator 103 has the elevator control function, that is, the second function. A second data identifier of the fire door 104 is FireDoor.switch (FireDoor.switch). The FireDoor.switch indicates that the fire door 104 has the fire door control function, that is, the second function.

The control device 101 receives the first data identifier that is, fireAlarm. Detection, sent by the fire alarm detector 102, and first detection data corresponding to fireAlarm. Detection, that is, fire alarm detection data. When a fire alarm is detected, the control device 101 determines that the trigger condition of the target object model rule is met. The control device 101 sends, to the elevator 103 having the elevator control function, a control instruction used to control the elevator to be shut down, and sends, to the fire door 104 having the fire door control function, a control instruction used to control the fire door to be closed. In this way, when the fire alarm is detected, the elevator and the fire control door can be controlled to shut down and to be closed. In this way, matching of internet of things devices having the fire alarm detection function, the elevator control function, and the fire door control function can be implemented, so that scalability of the internet of things is improved.

A third application scenario is a smart tunnel application scenario.

The control device 101 is an edge gateway. A target object model rule is preconfigured on the control device 101. The target object model rule includes a trigger condition and an execution action. The trigger condition is detecting that a carbon monoxide concentration exceeds a threshold. The execution action is to set a traffic light to red and turn on a lighting device. The trigger condition corresponds to a first function, that is, a carbon monoxide detection function. The execution action separately corresponds to a second function, that is, a traffic light control function, and another second function, that is, a lighting function. The internet of things device 102 is a carbon monoxide concentration detector 102, the internet of things device 103 is a traffic light 103, and the internet of things device 104 is a lighting device 104. A first data identifier of the carbon monoxide concentration detector 102 is CO. concentrationValue (CO. concentrationValue). The CO. concentrationValue indicates that the carbon monoxide concentration detector 102 has the carbon monoxide detection function, that is, the first function. A second data identifier of the traffic light 103 is trafficlight. runStatus (trafficlight. runStatus). The trafficlight.runStatus indicates that the traffic light 103 has the traffic light control function, that is, the second function. A second data identifier of the lighting device 104 is light.switch (light.switch). The light.switch indicates that the lighting device 104 has the lighting function, that is, the second function.

The control device 101 receives the first data identifier, that is, the CO. concentrationValue, sent by the carbon monoxide concentration detector 102, and first detection data, that is, carbon monoxide concentration detection data, corresponding to the first data identifier. When it is detected that the carbon monoxide concentration exceeds the threshold, the control device 101 determines that the trigger condition of the target object model rule is met. The control device 101 sends, to the traffic light 103 having the traffic light control function, a control instruction used to control the traffic light to display red, and sends, to the lighting device 104 having the lighting function, a control instruction used to control the lighting device to be turned on. In this way, when it is detected that carbon monoxide appears, the traffic light can be controlled to display red and the lighting device can be turned on. In this way, matching of internet of things devices having the first carbon monoxide concentration detection function, the traffic light control function, and the lighting function can be implemented, so that scalability of the internet of things is improved.

The foregoing three scenarios are merely used as examples. The method for controlling an internet of things device provided in embodiments of this application can be used in another internet of things device control scenario.

The following describes in detail various non-limiting specific implementations of the method for controlling an internet of things device provided in embodiments of this application.

FIG. 2 is a schematic flowchart of a method for controlling an internet of things device according to an embodiment of this application. The method for controlling an internet of things device can be applied to a control device in the internet of things. The control device is connected to the internet of things device, and is configured to control an internet of things device. The method includes the following steps.

S201: Receive a first data identifier and first detection data corresponding to the first data identifier that are sent by a first internet of things device, where the first data identifier indicates that the first internet of things device supports a first function. The first internet of things device is an internet of things device that has the first function in the internet of things and that sends the first data identifier and the first detection data to the control device. The first function is a function of the first internet of things device, and corresponds to a trigger condition of a target object model rule. In an example, the first function is an attribute (attribute) of the first internet of things device, for example, an event (event) that can be processed by the first internet of things device, or a method that can be provided by the first internet of things device. The attribute may also be referred to as a function point. The event may also be referred to as an alarm. The method may also be referred to a service, a command, or an interface.

It should be noted that there may be one or more first internet of things devices. In an example, there are a plurality of first internet of things devices. The smart life application scenario shown in FIG. 1 is used as an example. Both the light intensity detector 102 and the motion sensor 103 are first internet of things devices. In another example, there is one first internet of things device. The smart tunnel application scenario shown in FIG. 1 is used as an example. The carbon monoxide concentration detector is a first internet of things device. The carbon monoxide concentration detection function of the carbon monoxide concentration detector is the first function.

In addition, different first internet of things devices may have a same first function, or may have different first functions. In addition, a same first internet of things device can have one or more first functions.

For example, in an example, the trigger condition of the target object model rule is that environment data is lower than a threshold, and an execution action is to enable an environment purification device. The first internet of things device may be an environment detection device. The environment detection device has an environment detection function, that is, a first function. A plurality of environment detection devices that are disposed within a specific range separately send, to the control device for processing, environment data detected based on environment detection functions of the plurality of environment detection devices. In another example, the smart life application scenario shown in FIG. 1 is used as an example. The light intensity detection function of the light intensity detector 102 and the motion detection function of the motion sensor 103 are different first functions. The foregoing two examples are examples in which one first internet of things device has one first function. In still another example, a trigger condition of a target object model rule is that light intensity is less than 5 lux, and a motion of an object is detected. An execution action of the target object model rule is to control a light to turn on. The first internet of things device is a multi-functional sensor that has a light intensity detection function and a motion detection function. The multi-functional sensor supports two first functions: the light intensity detection function and the motion detection function.

A manner of receiving the first data identifier and the first detection data that are sent by the first internet of things device is not limited in embodiments of this application. In a possible implementation, the first internet of things device separately sends the first data identifier and the first detection data. The control device separately receives the first data identifier and the first detection data that are sent by the first internet of things device. In another possible implementation, the first internet of things device sends the first data identifier and the first detection data simultaneously. In an example, the first internet of things device sends running information to the control device. The running information includes the first data identifier of the first internet of things device and the first detection data corresponding to the first data identifier. The control device obtains the first data identifier and the first detection data from the obtained running information. The first data identifier indicates that the first internet of things device supports the first function. The first detection data is obtained by the first internet of things device through collection based on the first function. A specific type of the first data identifier is not limited in embodiments of this application.

In a possible implementation, the first data identifier is a first device identifier of the first internet of things device. The first device identifier of the first internet of things device identifies the first internet of things device. The first device identifier of the first internet of things device may reflect that the first internet of things device supports the first function. For example, the first device identifier may be device code of the first internet of things device, or product code of the first internet of things device. The device code or the product code of the first internet of things device may reflect a function supported by the first internet of things device.

A correspondence between the first device identifier and the first function supported by the first internet of things device needs to be established in advance. In this way, the first device identifier may indicate that the first internet of things device supports the first function. In a possible implementation, after the first internet of things device establishes the connection to the control device, the first internet of things device sends the first device identifier and a first function identifier to the control device. The control device obtains the first device identifier and the first function identifier that are of the first internet of things device. The first function identifier identifies the first function. In an example, the first function identifier is a function name of the first function. The control device establishes the correspondence between the first device identifier and the first function. In this way, after subsequently receiving the first device identifier, that is, the first data identifier, the control device may implement matching on the target object model rule based on the first function corresponding to the first device identifier, or may determine whether the first detection data meets the trigger condition of the target object model rule.

In another possible implementation, the first data identifier is a function name of the first function. The function name of the first function may directly indicate that the first internet of things device supports the first function. In an example, the function name of the first function may be a field name corresponding to the first detection data. In this way, the first detection data transmitted by the first internet of things device can be quickly and effectively processed, and the first internet of things device does not need to be configured in advance, so that plug-and-play of the first internet of things device can be implemented, and a use speed of the first internet of things device can be improved.

The first detection data is data obtained by the first internet of things device based on the first function. A specific type of the first detection data is not limited in embodiments of this application, and the specific type of the first detection data is determined based on the first function. The first detection data may be a specific value or a state value obtained through detection.

S202: Send a control instruction to a second internet of things device in response to that it is determined that the first detection data meets the trigger condition of the target object model rule.

The control device may determine whether the first detection data meets the trigger condition of the target object model rule. The target object model rule is an object model rule whose predetermined trigger condition corresponds to the first function. An implementation of determining the target object model rule is not limited in embodiments of this application. In a possible implementation, each time after obtaining the first data identifier, the control device queries, based on the first function indicated by the first data identifier, the target object model rule whose trigger condition corresponds to the first function. In another possible implementation, the control device determines the to-be-used target object model rule based on the first data identifier transmitted by the first internet of things device for a first time. After subsequently receiving the first detection data that corresponds to the first data identifier and that is transmitted by the first internet of things device, the control device directly determines whether the first detection data meets the trigger condition of the target object model rule.

A source of the target object model rule is not limited in embodiments of this application. In a possible implementation, the control device queries, from locally stored object model rules, the target object model rule whose trigger condition corresponds to the first function. In another possible implementation, the control device may send a query request to a device storing an object model rule. The device storing the object model rule is, for example, a server connected to the control device. The query request includes function information of the first function. The function information of the first function is, for example, a function name of the first function or a function identifier of the first function. The device storing the object model rule queries, based on the function information that is of the first function and that is included in the query request, the target object model rule corresponding to the first function. The device storing the object model rule feeds back the target object model rule to the control device. The control device may locally store the target object model rule received from the device storing the object model rule.

In a possible implementation, the target object model rule has an active state that can be adjusted. When the target object model rule needs to be applied, a user adjusts the target object model rule to an active state. When the target object model rule does not need to be applied, the user may adjust the target object model rule to an inactive state. In this way, flexible control of application of the object model rule is implemented.

The control device determines whether the first detection data meets the trigger condition of the target object model rule. It should be noted that, in some possible implementations, the control device may obtain first detection data respectively corresponding to different first functions. Correspondingly, the trigger condition of the target object model rule includes sub-conditions respectively corresponding to different first functions. When the first detection data meets a sub-condition corresponding to a corresponding first function, and sub-conditions of different first functions can be met, it is determined that the first detection data meets the trigger condition of the target object model rule. In an example, the smart life application scenario shown in FIG. 1 is used as an example. The control device obtains light intensity detection data that corresponds to sun.brightness and that is sent by the light intensity detector 102. The control device obtains motion detection data that corresponds to motion.detection and that is sent by the motion sensor 103. The trigger condition of the target object model rule is that light intensity is less than 5 lux and a motion of an object is detected. That the light intensity is less than 5 lux is a sub-condition corresponding to the light intensity detection function. That a motion of an object is detected is a sub-condition corresponding to the motion detection function. When determining that the light intensity detection data collected by using the light intensity detection function meets the sub-condition that the light intensity is less than 5 lux, and the motion detection data collected by using the motion detection function meets the sub-condition that a motion of an object is detected, the control device determines that the obtained first detection data meets the trigger condition of the target object model rule.

If the control device determines that the first detection data meets the trigger condition of the target object model rule, the control device controls the second internet of things device to perform the execution action of the target object model rule. The second internet of things device is an internet of things device that supports a second function. The execution action of the target object model rule corresponds to the second function. The execution action of the target object model rule may be executed by an internet of things device having the second function. It should be noted that the second internet of things device may be an internet of things device that is the same as the first internet of things device, or an internet of things device that is different from the first internet of things device. In addition, there may be one or more second internet of things devices. In an example, the smart campus application scenario shown in FIG. 1 is used as an example. The second internet of things device is the elevator 103 and the fire door 104. Different second internet of things devices may have a same second function, or may have different second functions. In addition, a same second internet of things device can have one or more second functions.

In addition, a specific implementation of determining the internet of things device supporting the second function, that is, the second internet of things device, is not limited in embodiments of this application. In an example, the control device determines, based on an obtained second data identifier sent by the second internet of things device, that the second internet of things device supports the second function. The second data identifier indicates that the second internet of things device supports the second function.

A specific type of the second data identifier is not limited in embodiments of this application.

In a possible implementation, the second data identifier is a second device identifier of the second internet of things device. The second device identifier identifies the second internet of things device. The second device identifier may be an identifier that reflects the second function supported by the second internet of things device. For example, the device identifier of the second internet of things device may be device code of the second internet of things device or product code of the second internet of things device. The device code or the product code of the second internet of things device may reflect a function supported by the second internet of things device.

A correspondence between the second device identifier of the second internet of things device and the second function supported by the second internet of things device needs to established in advance. In a possible implementation, after the second internet of things device establishes the connection to the control device, the second internet of things device sends the second device identifier and a second function identifier to the control device. The second function identifier identifies the second function. In an example, the second function identifier is a function name of the second function. The control device establishes the correspondence between the second device identifier and the second function. In this way, when the control device subsequently needs to control, according to the target object model rule, the internet of things device having the second function, the control device can determine, based on the correspondence between the second device identifier and the second function, that the second internet of things device has the second function, to control the second internet of things device.

In another possible implementation, the second data identifier is a function name of the second function. The function name of the second function may directly indicate that the second internet of things device supports the second function. In an example, the function name of the second function may be a field name corresponding to second detection data sent by the second internet of things device to the control device. After receiving the second detection data sent by the second internet of things device, the control device controls the second internet of things device based on the function name of the second function, so that plug-and-play of the second internet of things device can be implemented, and a use speed of the second internet of things device can be improved.

A manner of determining the second internet of things device to which the control instruction is to be sent is not limited in embodiments of this application. In a possible implementation, if it is determined that the trigger condition of the target object model rule is met, the control device queries connected internet of things devices for the internet of things device that supports the second function, that is, the second internet of things device. In another possible implementation, if it is determined that the trigger condition of the target object model rule is met, the control device determines, based on historical data of controlling the internet of things device according to the target object model rule, the second internet of things device to which the control instruction needs to be sent.

The control device generates the control instruction based on the execution action of the target object model rule, and sends the control instruction to the second internet of things device. The second internet of things device may perform the execution action of the target object model rule based on the obtained control instruction.

It can be learned from related content in S201 and S202 that the internet of things device can be controlled from a function dimension by using the target object model rules that respectively correspond to the first function and the second function. The target object model rule is not specific to a specific device or product type, and can be applied to a wide range of devices or products, so that scalability of the internet of things can be improved. In addition, in a scenario with a large quantity of internet of things devices, automatic control on the internet of things devices is implemented according to an object model rule, so that operation efficiency can be improved, an operation of manually configuring a rule for each internet of things device can be reduced, and a problem occurrence probability can be reduced.

In a possible implementation, when the internet of things device is controlled according to the target object model rule, a range in which the internet of things device is located further needs to be considered. The range may be a location or an organization to which the internet of things device belongs. This is not limited in this application. For example, in the smart home application scenario, internet of things devices belonging to a same family needs to be controlled. For another example, in the smart campus application scenario, internet of things devices belonging to a same campus needs to be controlled, or internet of things devices in a same building in the campus needs to be controlled. An embodiment of this application further provides a method for controlling an internet of things device. The target object model rule further includes a range condition. The range condition is used to determine a condition in terms of a range that the first internet of things device and the second internet of things device need to meet. The range condition may reflect an applicable scope of the target object model rule. A type of the range condition is not limited in embodiments of this application. For example, the range condition is a tag. For another example, the range condition is a range parameter.

Before the control instruction is sent to the second internet of things device in response to that it is determined that the first detection data meets the trigger condition of the target object model rule in S202, the method further includes the following steps.

A1: Obtain range information of the first internet of things device.

The range information of the first internet of things device indicates a range to which the first internet of things device belongs. In an example, the range condition is specifically a location condition. The range of the first internet of things device may be a geographical location at which an entity of the first internet of things device is located. For example, the range information is a location tag. The location tag may be preset based on the geographical location of the first internet of things device. For example, a same location tag is set for internet of things devices belonging to a same building. For another example, the range information is positioning data of the geographical location of the first internet of things device. The range information may be generated by using a positioning function of the first internet of things device. In another example, the location of the first internet of things device may be a network location of the first internet of things device. The range information may be a network address of the first internet of things device.

A manner in which the control device obtains the range information of the first internet of things device is not limited in embodiments of this application. In a possible implementation, after establishing the connection to the control device, the first internet of things device sends the range information of the first internet of things device to the control device. In another possible implementation, the first internet of things device simultaneously sends the range information and one or more of the first data identifier and the first detection data to the control device. The control device determines, based on the range information of the first internet of things device, whether the location of the first internet of things device meets the range condition of the target object model rule.

A2: Determine that the range information of the first internet of things device meets the range condition.

The control device determines whether the range information of the first internet of things device meets the range condition. The control device sends the control instruction to the second internet of things device after determining that the range information of the first internet of things device meets the range condition. A specific implementation in which the control device determines whether the range information of the first internet of things device meets the range condition is not limited in embodiments of this application. Whether the range information meets the range condition can be determined based on a specific type of the range information. In an example, both the range information and the range condition are represented by using tags. The control device determines whether the range information is the same as the range condition. If the range information is the same as the range condition, it indicates that the range information meets the range condition. In still another example, the range information is the network address of the first internet of things device. The range condition is network number of a network. The control device determines whether the range information belongs to the range condition. If the range information belongs to the range condition, it indicates that the range information meets the range condition.

In this case, the execution action of the target object model rule needs to be performed by the second internet of things device that meets the range condition. A specific implementation of sending the control instruction to the second internet of things device provided in embodiments of this application includes:
sending the control instruction to a second internet of things device whose range information meets the range condition.

The range information of the second internet of things device indicates a range of the second internet of things device. A representation manner of the range of the second internet of things device is the same as a representation manner of the range of the first internet of things device.

A manner in which the control device obtains the range information of the second internet of things device is not limited in embodiments of this application. In a possible implementation, after establishing the connection to the control device, the second internet of things device sends the range information to the control device. In another possible implementation, when sending other data, for example, the second data identifier, to the control device, the second internet of things device further sends the range information of the second internet of things device. The control device may determine, based on the obtained range information of the second internet of things device, whether the range of the second internet of things device meets the range condition of the target object model rule.

The control device sends the control instruction to the second internet of things device whose range information meets the range condition, to control the second internet of things device whose range information meets the range condition.

In this way, based on the range condition included in the target object model rule, an internet of things device that meets the range condition can be controlled. This implements precise control on the internet of things device. In addition, the range condition can be adjusted to quickly promote use of the object model rule in different scenarios.

Based on the method for controlling an internet of things device provided in embodiments of this application, FIG. 3 is a diagram of a structure of an apparatus 300 for controlling an internet of things device according to an embodiment of this application. The apparatus 300 for controlling an internet of things device may implement the method for controlling an internet of things device shown in FIG. 2. This figure is a diagram of a structure of an apparatus for controlling an internet of things device according to an embodiment of this application. The apparatus 300 for controlling an internet of things device includes a receiving unit 301 and a sending unit 302. For specific functions of modules in the apparatus 300 for controlling an internet of things device, refer to related descriptions in the embodiment shown in FIG. 2. The receiving unit 301 is configured to implement S201 in the embodiment shown in FIG. 2. The sending unit 302 is configured to implement S202 in the embodiment shown in FIG. 2.

Specifically, the receiving unit 301 is configured to receive running information sent by a first internet of things device, where the running information includes a first data identifier and first detection data corresponding to the first data identifier, and the first data identifier indicates that the first internet of things device supports a first function.

The sending unit 302 is configured to send a control instruction to a second internet of things device in response to that it is determined that the first detection data meets a trigger condition of a target object model rule, where the second internet of things device supports a second function, the control instruction instructs the second internet of things device to perform an execution action of the target object model rule, the trigger condition of the target object model rule corresponds to the first function, and the execution action corresponds to the second function.

In a possible implementation, the first data identifier is a first device identifier of the first internet of things device, and the receiving unit 301 is further configured to receive the first device identifier and a first function identifier that are sent by the first internet of things device, where the first function identifier identifies the first function.

The apparatus further includes:
an establishment unit, configured to establish a correspondence between the first device identifier and the first function.

In a possible implementation, the first data identifier is a function name of the first function.

In a possible implementation, the receiving unit 301 is further configured to obtain a second data identifier sent by the second internet of things device, where the second data identifier indicates that the second internet of things device supports the second function.

The apparatus further includes:
a determining unit, configured to determine, based on the second data identifier, that the second internet of things device supports the second function.

In a possible implementation, the second data identifier is a second device identifier of the second internet of things device, and the receiving unit 301 is further configured to receive a second function identifier sent by the second internet of things device, where the second function identifier identifies the second function.

The establishment unit is further configured to establish a correspondence between the second device identifier and the second function.

In a possible implementation, the second data identifier is a function name of the second function.

In a possible implementation, the target object model rule further includes a location condition, and before the control instruction is sent to the second internet of things device corresponding to the second data identifier, the receiving unit 301 is further configured to obtain location information of the first internet of things device.

The apparatus further includes:
a determining unit, configured to determine that the location information of the first internet of things device meets the location condition.

That the sending unit 302 is configured to send the control instruction to the second internet of things device includes:
the sending unit 302 is configured to send the control instruction to a second internet of things device whose location information meets the location condition.

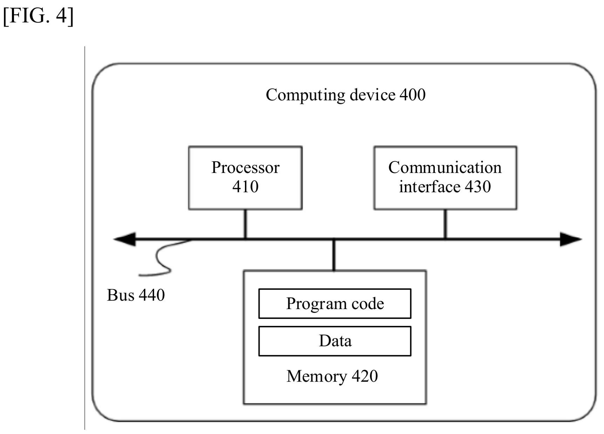

FIG. 4 is a diagram of a structure of a computing device. The foregoing apparatus 300 for controlling an internet of things device may be deployed on the computing device. The computing device may be a computing device (for example, a server) in a cloud environment, a computing device in an edge environment, a terminal device, or the like that may be specifically configured to implement functions of the receiving module 301 and the sending module 302 in the embodiment shown in FIG. 3.

As shown in FIG. 4, the computing device 400 includes a processor 410, a memory 420, a communication interface 430, and a bus 440. The processor 410, the memory 420, and the communication interface 430 communicate with each other through the bus 440. The bus 440 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used to represent the bus in FIG. 4, but this does not mean that there is only one bus or only one type of bus. The communication interface 430 is configured to communicate with the outside, for example, receive running information sent by the first internet of things device.

The processor 410 may be a central processing unit (central processing unit, CPU), an application-specific integrated circuit (application-specific integrated circuit, ASIC), a graphics processing unit (graphics processing unit, GPU), or one or more integrated circuits. The processor 410 may be an integrated circuit chip and has a signal processing capability. In an implementation process, functions of modules in the apparatus for controlling an internet of things device may be completed by using an integrated logic circuit of hardware in the processor 410 or by using instructions in a form of software. The processor 410 may alternatively be a general-purpose processor, a data signal processor (digital signal processor, DSP), a field programmable gate array (field programmable gate array, FPGA) or another programmable logic device, a discrete gate or transistor logic device, or a discrete hardware component, the processor may implement or perform the methods, steps, and logical block diagrams disclosed in embodiments of this application. The general-purpose processor may be a microprocessor, or the processor may be any conventional processor, or the like. The method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 420. The processor 410 reads information in the memory 420, and completes some or all functions of the apparatus for controlling an internet of things device in combination with hardware of the processor 410.

The memory 420 may include a volatile memory (volatile memory), for example, a random access memory (random access memory, RAM). The memory 420 may further include a non-volatile memory (non-volatile memory), for example, a read-only memory (read-only memory, ROM), a flash memory, an HDD, or an SSD.

The memory 420 stores executable code, and the processor 410 executes the executable code to perform the method performed by the apparatus for controlling an internet of things device.

Specifically, when the embodiment shown in FIG. 3 is implemented, and the receiving module 301 and the sending module 302 described in the embodiment shown in FIG. 3 are implemented by using software, software or program code required for performing functions of the receiving module 301 and the sending module 302 in FIG. 3 is stored in the memory 420. Interaction between the receiving module 301 and another device is implemented through the communication interface 430. The processor is configured to execute instructions in the memory 420, to implement the method performed by the apparatus for controlling an internet of things device.

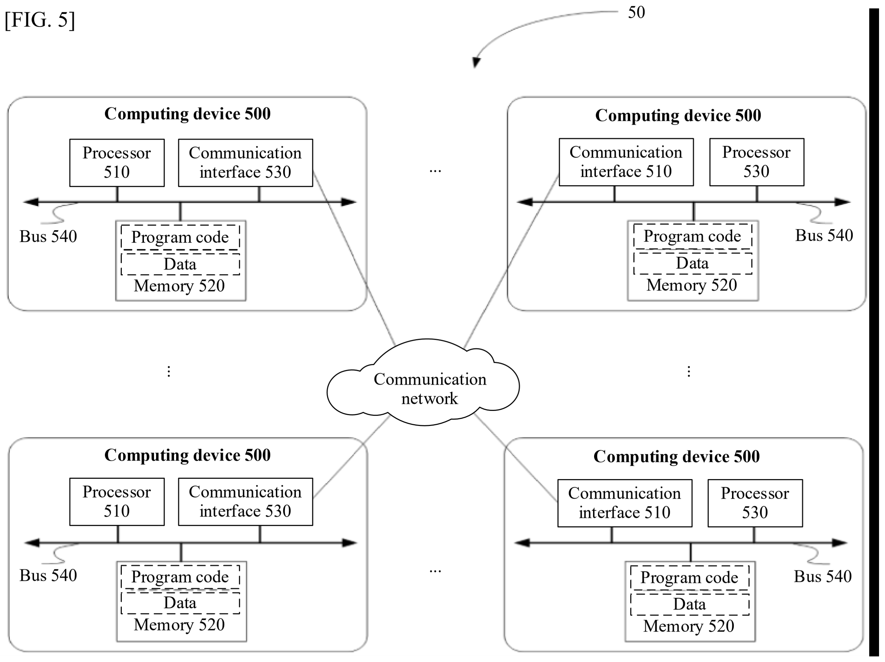

FIG. 5 is a diagram of a structure of a computing device cluster. The computing device cluster 50 shown in FIG. 5 includes a plurality of computing devices, and the foregoing apparatus for controlling an internet of things device may be deployed on the plurality of computing devices in the computing device cluster 50 in a distributed manner. As shown in FIG. 5, the computing device cluster 50 includes the plurality of computing devices 500. Each computing device 500 includes a memory 520, a processor 510, a communication interface 530, and a bus 540. The memory 520, the processor 510, and the communication interface 530 implement mutual communication connections through the bus 540.

The processor 510 may use a CPU, a GPU, an ASIC, or one or more integrated circuits. The processor 510 may be an integrated circuit chip and has a signal processing capability. In an implementation process, some functions of the apparatus for controlling an internet of things device may be completed by using an integrated logic circuit of hardware in the processor 510 or by using instructions in a form of software. The processor 510 may alternatively be a DSP, an FPGA, a general-purpose processor, another programmable logic device, a discrete gate or transistor logic device, or a discrete hardware component, and may implement or perform a part of methods, steps, and logical block diagrams disclosed in embodiments of this application. The general-purpose processor may be a microprocessor, or the processor may be any conventional processor, or the like. Steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 520. In each computing device 500, the processor 510 reads information in the memory 520, and may complete some functions of the apparatus for controlling an internet of things device in combination with hardware of the processor 510.

The memory 520 may include a ROM, a RAM, a static storage device, a dynamic storage device, a hard disk (for example, an SSD or an HDD), and the like. The memory 520 may store program code, for example, some or all program code used to implement the receiving module 301, or some or all program code used to implement the sending module 302. For each computing device 500, when the program code stored in the memory 520 is executed by the processor 510, the processor 510 performs, based on the communication interface 530, some methods performed by the apparatus for controlling an internet of things device. For example, some computing devices 500 may be configured to perform the methods performed by the receiving module 301, and the other computing devices 500 are configured to perform the methods performed by the sending module 302. The memory 520 may further store data, for example, intermediate data or result data generated by the processor 510 in an execution process.

The communication interface 503 in each computing device 500 is configured to communicate with the outside, for example, interact with another computing device 500.

The bus 540 may be a peripheral component interconnect bus, an extended industry standard architecture bus, or the like. For ease of representation, the bus 540 in each computing device 500 in FIG. 5 is represented by using only one thick line, but this does not mean that there is only one bus or only one type of bus.

A communication path is established between the plurality of computing devices 500 through a communications network, to implement a function of the apparatus for controlling an internet of things device. Any one of the computing devices may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, so that the one or more computing devices perform any one of the methods for controlling an internet of things device in the foregoing embodiments.

In addition, an embodiment of this application further provides a computer program product. When the computer program product is executed by one or more computing devices, the one or more computing devices perform any one of the foregoing methods for controlling an internet of things device. The computer program product may be a software installation package. When any one of the foregoing methods for controlling an internet of things device needs to be used, the computer program product may be downloaded and executed on a computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, in the accompanying drawings of the apparatus embodiments provided in this application, connection relationships between units indicate that the units have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented through software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a general-purpose or a dedicated computer.

The objectives, technical solutions, and beneficial effects of this application are further described in detail in the foregoing specific implementations. It should be understood that the foregoing descriptions are merely specific implementations of this application.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for controlling an internet of things device, wherein the method is applied to a control device, and the method comprises:
receiving a first data identifier and first detection data corresponding to the first data identifier that are sent by a first internet of things device, wherein the first data identifier indicates that the first internet of things device supports a first function; and
sending a control instruction to a second internet of things device in response to that it is determined that the first detection data meets a trigger condition of a target object model rule, wherein the second internet of things device supports a second function, the control instruction instructs the second internet of things device to perform an execution action of the target object model rule, the trigger condition of the target object model rule corresponds to the first function, and the execution action corresponds to the second function.

2. The method according to claim 1, wherein the first data identifier is a first device identifier of the first internet of things device, and the method further comprises:
receiving the first device identifier and a first function identifier that are sent by the first internet of things device, wherein the first function identifier identifies the first function; and
establishing a correspondence between the first device identifier and the first function.

3. The method according to claim 1, wherein the first data identifier is a function name of the first function.

4. The method according to any one of claims 1 to 3, wherein the method further comprises:
obtaining a second data identifier sent by the second internet of things device, wherein the second data identifier indicates that the second internet of things device supports the second function; and
determining, based on the second data identifier, that the second internet of things device supports the second function.

5. The method according to claim 4, wherein the second data identifier is a second device identifier of the second internet of things device, and the method further comprises:
receiving a second function identifier sent by the second internet of things device, wherein the second function identifier identifies the second function; and
establishing a correspondence between the second device identifier and the second function.

6. The method according to claim 4, wherein the second data identifier is a function name of the second function.

7. The method according to any one of claims 1 to 6, wherein the target object model rule further comprises a range condition, and before the sending the control instruction to the second internet of things device corresponding to the second data identifier, the method further comprises:
obtaining range information of the first internet of things device; and
determining that the range information of the first internet of things device meets the range condition; and
the sending the control instruction to the second internet of things device comprises:
sending the control instruction to a second internet of things device whose range information meets the range condition.

8. An apparatus for controlling an internet of things device, wherein the apparatus comprises:
a receiving unit, configured to receive running information sent by a first internet of things device, wherein the running information comprises a first data identifier and first detection data corresponding to the first data identifier, and the first data identifier indicates that the first internet of things device supports a first function; and
a sending unit, configured to send a control instruction to a second internet of things device in response to that it is determined that the first detection data meets a trigger condition of a target object model rule, wherein the second internet of things device supports a second function, the control instruction instructs the second internet of things device to perform an execution action of the target object model rule, the trigger condition of the target object model rule corresponds to the first function, and the execution action corresponds to the second function.

9. The apparatus according to claim 8, wherein the first data identifier is a first device identifier of the first internet of things device, and the receiving unit is further configured to receive the first device identifier and a first function identifier that are sent by the first internet of things device, wherein the first function identifier identifies the first function; and
the apparatus further comprises:
an establishment unit, configured to establish a correspondence between the first device identifier and the first function.

10. The apparatus according to claim 8, wherein the first data identifier is a function name of the first function.

11. The apparatus according to any one of claims 8 to 10, wherein the receiving unit is further configured to obtain a second data identifier sent by the second internet of things device, wherein the second data identifier indicates that the second internet of things device supports the second function; and
the apparatus further comprises:
a determining unit, configured to determine, based on the second data identifier, that the second internet of things device supports the second function.

12. The apparatus according to claim 11, wherein the second data identifier is a second device identifier of the second internet of things device; and the receiving unit is further configured to receive a second function identifier sent by the second internet of things device, wherein the second function identifier identifies the second function; and
the establishment unit is further configured to establish a correspondence between the second device identifier and the second function.

13. The apparatus according to claim 11, wherein the second data identifier is a function name of the second function.

14. The apparatus according to any one of claims 8 to 13, wherein the target object model rule further comprises a location condition, and before the control instruction is sent to the second internet of things device corresponding to the second data identifier, the receiving unit is further configured to obtain location information of the first internet of things device; and
the apparatus further comprises:
a determining unit, configured to determine that the location information of the first internet of things device meets the location condition; and
that the sending unit is configured to send the control instruction to the second internet of things device comprises:
the sending unit is configured to send the control instruction to a second internet of things device whose location information meets the location condition.

15. A device, wherein the device comprises a processor and a memory, wherein
the processor is configured to execute instructions stored in the memory, to enable the device to perform the method according to any one of claims 1 to 7.

16. A computing device cluster, comprising at least one computing device, wherein each computing device comprises a processor and a memory, wherein
the processor is configured to execute instructions stored in the memory, to enable the computing device cluster to perform the method according to any one of claims 1 to 7.

17. A computer-readable storage medium, wherein the computer-readable storage medium stores instructions, and when the instructions are run on at least one computing device, the at least one computing device is enabled to perform the method according to any one of claims 1 to 7.
